# EUROPEAN PATENT SPECIFICATION

(11) **EP 3 834 984 B1**
(45) Date of publication and mention of the grant of the patent: **07.02.2024**
(21) Application number: 19214701.5
(22) Date of filing: 10.12.2019
(51) Int. Cl.: B23Q 1/01

(54) **MACHINE STRUCTURE FOR MACHINE TOOL**
MASCHINENSTRUKTUR FÜR WERKZEUGMASCHINE
STRUCTURE DE MACHINE POUR MACHINE-OUTIL

(43) Date of publication of application: 16.06.2021
(73) Proprietor: GF Machining Solutions AG, 1217 Meyrin (CH)
(72) Inventor: Roulet, Francois, 74250 Fillinges (FR)
(74) Representative: Li Schrag, Yue

(56) References cited:
- EP-A1- 1 614 503
- WO-A1-2019/220286
- JP-A- H02 160 440
- US-A1- 2004 090 126

## Description

### FIELD OF THE INVENTION

The present invention is related to a machine structure for 5-axis machine tool. In particular, the present invention relates to a machine tool with the machine structure, preferably the machine tool is machine tool for laser machining, laser texturing, cutting, cladding, milling, drilling and additive manufacturing.

### BACKGROUND OF THE INVENTION

Gantry-type machine tools are machine tools having a gantry machine structure, which refers to a structure having bridges over an area and is able to move on a pair of parallel rails. Depending on the size of the machine tools, different size of gantry machine structure can be used to build the machine tool. For example, large gantry machine structures are usually chosen by machine tool manufacturer if the machine tool is used to machine heavy parts.

These days, the gantry machine structure is widely used in the 5-axis machine tools to provide a precise machining of a workpiece. During the machining, the workpiece is fixed on a machine bed, which can be part of the gantry machine structure. A machine head is normally mounted on another part of the gantry machine structure. The ganty machine structure enables to position the machine head in any position of X, Y and Z direction.

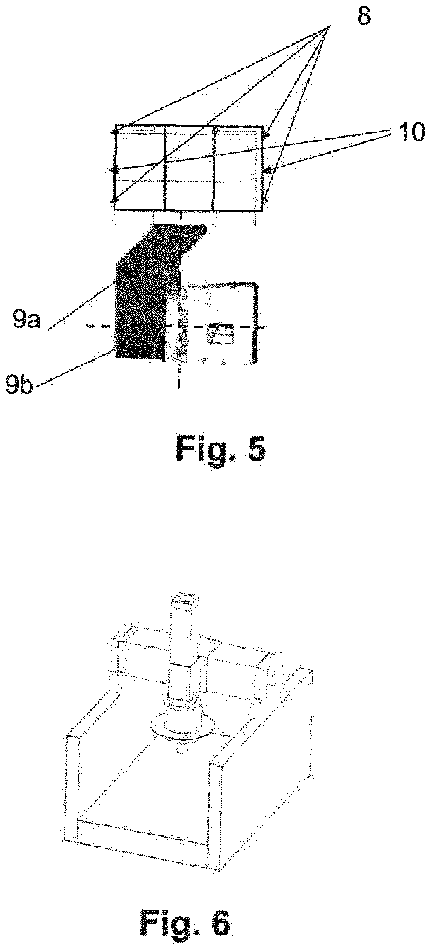

Conventional gantry machine tool usually includes one gantry as shown in figure 6. Standard so-called mono-gantry machine structure uses XYZCB kinematic with a Z-column. Due to the movement of two axis, such structure is usually quite tall, because the Z column upper position gives the height dimension of the building required to install the machine tool therein.

Additionally, the large height of the building may cause temperature gradient between the top part and the bottom part of the machine, which may cause losses in positioning accuracy. Additionally, having a Z-column in machine design expose it to higher external temperature variation. In order to reduce the losses in positioning accuracy on mono-gantry machine, the room temperature, where the machine tool is installed, must be controlled more precisely with costly air conditioning system.

WO 2019/220286, which forms the basis for the preamble of appended claim 1, discloses a gantry milling machine, which is provided with a pair of uprights and for each upright, it is provided with a worm screw and a screw, an upper electric motro, engaged with the secrew, directly or indirectly, at the upper end, and a lower electric motro, engaged with the screw, directly or indirectly, at the lower end. JP H02 160440 discloses a machine tool. A column stepping over a table is made freely movable in X axial direction , a first movable saddle and second movable saddle are provided freely movably in Y axial direction on a cross rail and a spindle head is fitted to the saddle as well. EP 1614503 discloses a machine tool comprising a table supported by a bed forwardly and reawardly movably, a pair of left and right columns provided upright on opposite sides of a path of movement of the table, a cross rail supported by the columns upwardly and downwardly movably, and a spindle head supported by the corss rail leftwardly and rightwardly movably.

### summary of the invention

It is an objective of this invention to provide a machine structure for a machine tool, which has a compact design. It is a further objective of this invention to provide a machine structure for a machine tool having a low height, thus improving its thermal stability.

According to the present invention, these objectives are achieved through the features of independent claims. In addition, further advantageous embodiments follow from the dependent claims and the description.

In the present invention, a machine structure mounted in a machine tool, in particular a 5-axis machine tool comprises a base and at least two linear guides arranged on the top surface of side walls of the base " and positioned in parallel. A first column and a second column are vertically mounted to the top surface of the base and is configured to be movable on the at least two linear guides. The first column and the second column are connected by a beam, which can be driven by a motor such that the beam can be moved in the vertical direction. In the conventional design, the so-called mono-gantry machine structure, the beam is fixedly mounted between two columns and a moveable Z-column is required for the movement in the Z-direction. In order to move the machine head provided on the z-column, the z-column is driven by a motor and during the machining the z-column is moved in the Z-direction to position the machine head to the defined position. In the present invention, the beam is designed to be moved in the Z-direction, therefore, the Z-column can be saved, which leads to a reduction of the total height of the machine structure. If a machine tool includes such light-height machine structure, the total height of the machine tool can thereby be reduced. Additionally, In view of the thermal sensitivity, the machine structure of the present invention is less thermally sensitive than the conventional design because all 5 axis are included in the same enclosure and the machine structure has a symmetric structure.

In a preferred embodiment, each column is driven by a linear motor. The beam is driven by two brushless motors with ballcrew. For the stability of the machine structure and precision of the machining, it is essential to control the motors in a way that the movement of two columns is highly synchronized. The same requirement is applied to the movement of the beam. Both sides of the beam must be guided in parallel.

In an advantageous variant, a gantry element is mounted on the beam and at least one beam rail, preferably a pair of beam rails is arranged on a surface of the beam to enable the gantry element to be moved along the beam rail. Machine tools comprise a machine head for cutting, milling, laser ablating, drilling, cladding, additive manufacturing in which corresponding tools are clamped in the machine head during the machining. In an embodiment, a machine head is fixed mounted on the gantry element, in particular on the bottom surface of the gantry element to ensure a flexible movement of the machine head, in particular the rotations of the machine head.

In a further variant, four beam rails are mounted. The machine head is moved along these beam rails thanks to two linear motors working in gantry mode and mounted on the front surface and rear surface of the beam. The gantry element includes two rotary axis, C and B, carrying the machine head. These two rotary axis are sued to orientate machine head to position the machine head at the right angle to realize the machining. The two rotary axis are balanced in a way that the gravity center of the gantry element is independent from B and/or C position. In this manner, the movable mass is centered, thus, the stability of the machine structure is less sensitive to movable weight.

Structural load and thermal symmetry are given by the chosen layout, in particular the arrangement of the gantry element and the laser head to realize the beam and gantry element guaranties machine stability in time.

A symmetric design of the beam and the elements mounted on the beam is essential to avoid the undesirable bending moments and thermal gradients. For this reason, the cross section of the beam has a rectangular shape, preferably a square shape.

For a stable movement, it is advantageous to guide the beam on at least two column rails provided separately on the first column and the second column, in particular, the beam is arranged between the first column and the second column and the two column rails are positioned on the inner side surface of the columns. In one variant, on each column a pair of column rails are mounted to enhance the stability of the movement. Z axis yaw and pitch are minimized thanks to the huge distance between the two columns.

In a favorable variant, the gantry element is symmetric to the axis along which the gantry element is moveable, in particular the gantry element is moveable in the horizontal direction, preferably, in the X-direction.

Due to use of linear motors, heat generated has a negative impact on the machine structure. Therefore, cooling channels are provided on the linear guides, and/or column rails and/or beam rails.

The base comprises a machine bed and two side walls, which are vertically protruded from the machine bed, in particular, the top surface of the side wall has a slope from 20 degree to 50 degree, in particular the slope is 40 degree. The base comprises a bottom part and two side walls, which are vertically protruded on the bottom part and the top surface of the side part has a slope from 20 degree to 50 degree, in particular, the slope is 40 degree. This slope has two main advantages. Firstly, it improves machine compact design to integrate Z stroke. Secondly, it increases distance between the two linear guides to be less sensitive to machine base inaccuracy.

In the present invention, a machine tool in particular for laser machining comprises the machine structure.

### BRIEF DESCRIPTION OF THE DRAWINGS

In order to describe the manner in which advantages and features of the disclosure can be obtained, in the following a more particular description of the principles briefly described above will be rendered by reference to specific embodiments thereof which are illustrated in the appended drawings. These drawings depict only exemplary embodiments of the disclosure and are not therefore to be considered to be limiting of its scope. The principles of the disclosure are described and explained with additional specificity and detail through the use of the accompanying drawings in which:
- Fig. 1: illustrates a 3-dimensional representation of the machine structure;
- Fig. 2: illustrates a top view of the machine structure;
- Fig. 3: illustrates a 3-dimensional representation of the machine structure used in a machine tool for laser machining;
- Fig. 4: Illustrates the front view of the machine structure;.
- Fig. 5: illustrates the beam and the machine head; and the rotary axis
- Fig. 6: conventional mono-gantry machine tool.

### EXEMPLARY EMBODIMENTS

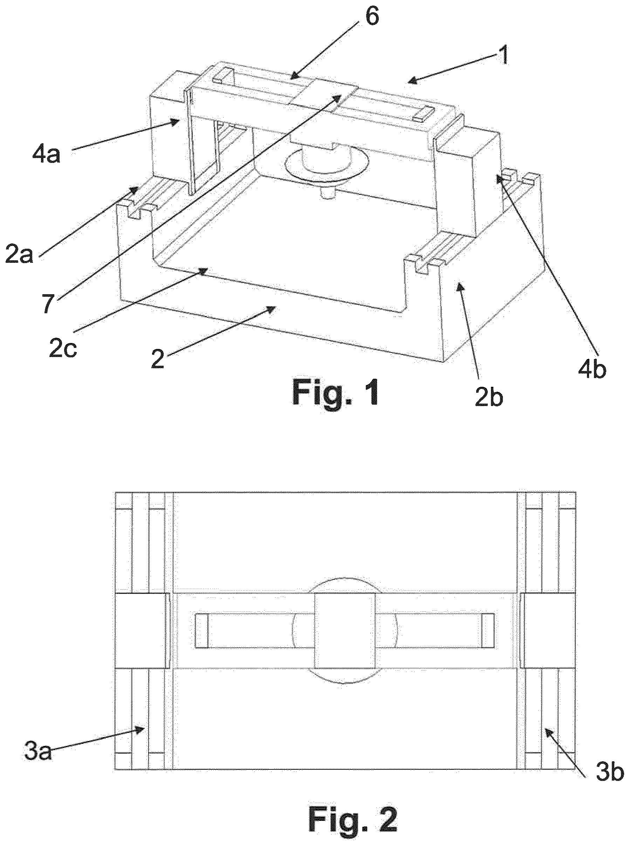

Figure 1 shows a 3-dimensional representation of a machine structure for a machine tool. The machine structure comprises a base 2 having a machine bed 2c and two side walls 2a, 2b, which stand upright parallel on the machine bed and spaced apart. In the embodiment shown in figure 1, the base can be produced in one piece. As shown in the figure 2, a first pair of linear guide 3a and a second pair of linear guide 3b are arranged separately on the top surface of the side walls. A first column 4a and a second column are designed such that the first column 4a can move on the first pair of linear guide in the Y-direction and the second column 4b can move on the second pair of linear guide in the Y-direction. The two linear guides of the each pair of linear guide are positioned on a plane which has an inclined angle to the horizontal plane, e.g. 40 degree. The first column and the second column are connected by a beam 6, which is moveably mounted between the two columns and is able to be guided in the vertical Z-direction on the two pairs of column rails. A gantry element 7 is detachably mounted on the beam and can be guided along a pair of beam rail.

Figure 2 shows the top view of the assembly.

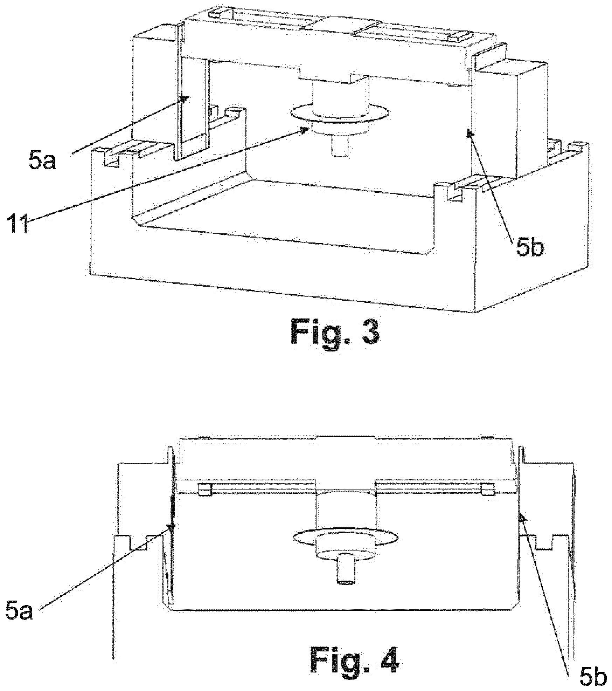

Figure 3, 4 and 5 show an embodiment, in which the machine structure is designed to be implemented in a machine tool for laser machining. As shown in figure 3, a laser head is mounted on the bottom of the gantry element and includes two rotary axis B and C, which are rotary axis in horizontal plane and Z rotary axis. Figure 4 is a front view of the figure 3.

Figure 5 illustrates an embodiment, in which two pair of beam rails are provided on the beam such that the beam can be selectively moved on one of the pair of beam rails. On the top of the front surface and the top of rear surface of the beam two low-precision beam rails are mounted for fast movement of the gantry element. On the bottom of the beam two further beam rails are mounted for precise movement of the gantry element.

### LIST OF REFERENCES

- 1: machine tool
- 2: base
- 2a, 2b: side walls
- 2c: machine bed
- 3a: first pair of linear guides
- 3b: second pair of linear guides
- 4a: first column
- 4b: second column
- 5a: first pair of column rails
- 5b: first pair of column rails
- 6: beam
- 7: gantry element
- 8: 2 pairs of beam rails
- 9a: C axis
- 9b: B axis
- 10: 2 linear motors
- 11: machine head

## Claims

1. A machine structure for a machine tool (1), in particular a 5-axis machine tool comprising:
a base (2);
a first column (4a) and a second column (4b) vertically mounted to the top surface of the base (2) and configured to be movable;
**characterized in that**
the first column and the second column are connected by a beam (6), which can be driven by a motor such that the beam (6) can be moved in the vertical direction,
wherein the base (2) comprises a machine bed (2c) and two side walls (2a, 2b), which are vertically protruded from the machine bed (2c), a first pair of linear guide (3a) and a second pair (3b) of linear guide are arranged ; in parallel and separately on the top surface of the side walls (2a, 2b) and the first column (4a) and the second column (4b) are designed such that the first column (4a) can move on the first pair of linear guide in the Y-direction and the second column (4b) can move on the second pair of linear guide in the Y-direction, the top surface of the side walls has a slope from 20 degree to 50 degree, in particular the slope is 39 degree.

2. The machine structure according to claim 1, wherein a gantry element (7) is mounted on the beam (6) and at least one beam rail (8) is arranged on a surface of the beam (6) to enable the gantry element (7) to be moved along the beam rail (8).

3. The machine structure according to claim 1 or 2, wherein two rotational axes and machine head (11) are fixed mounted on the gantry element (7), in particular on the bottom surface of the gantry element. element (7).

4. The machine structure according to claim 3, wherein the mounting position of the two rotational axis and the machine head (11) is selected in a manner that gravity center of the two rotational axis and machine head (11) is centered on the beam (6).

5. The machine structure according to one of claims 2 to 4, wherein the gantry element (7) is symmetric to the axis along which the gantry element (7) is moveable, in particular the gantry element (7) is moveable in a horizontal direction, preferably in the X-direction.

6. The machine structure according to one of claims 2 to 5, wherein the beam (6) can be guided on at least two column rails (5a, 5b) provided separately on the first column (4a) and the second column (4b), in particular, the beam (6) is arranged between the first column (4a) and the second column (4b) and the two column rails (5a, 5b) are positioned on the inner side surface of the columns (5a, 5b).

7. The machine structure according to one of claims 1 to 6, wherein cooling channels are provided on the linear guides (3a, 3b) mounted on the side walls (2a, 2b) and and/or beam rails.

8. The machine structure according to one of claims 1 to 7, wherein the cross section of the beam (6) has a rectangular shape, preferably a square shape

9. The machine structure according to one of claims 1 to 8, the base (2), the first column (4a) and the second column (4b) and the beam (6) form a closed frame

10. A machine tool, in particular for laser machining, laser texturing, cutting, cladding, milling, drilling and additive manufacturing comprising the machine structure according to one of claims 1 to 9.

## Patentansprüche

1. Maschinenstruktur für eine Werkzeugmaschine (1), insbesondere eine 5-Achsen-Werkzeugmaschine, umfassend:
einen Sockel (2);
eine erste Säule (4a) und eine zweite Säule (4b), die vertikal an der Oberseite des Sockels (2) angebracht und so gestaltet sind, dass sie bewegbar sind;
**dadurch gekennzeichnet, dass**
die erste Säule und die zweite Säule durch einen Träger (6) verbunden sind, der durch einen Motor so angetrieben werden kann, dass der Träger (6) in vertikaler Richtung bewegt werden kann,
wobei der Sockel (2) ein Maschinenbett (2c) und zwei Seitenwände (2a, 2b) umfasst, die vertikal aus dem Maschinenbett (2c) herausragen, ein erstes Paar von Linearführungen (3a) und ein zweites Paar (3b) von Linearführungen parallel und getrennt auf der Oberseite der Seitenwände (2a, 2b) angeordnet sind und die erste Säule (4a) und die zweite Säule (4b) so ausgebildet sind, dass sich die erste Säule (4a) auf dem ersten Paar von Linearführungen in Y-Richtung und die zweite Säule (4b) auf dem zweiten Paar von Linearführungen in Y-Richtung bewegen kann, wobei die Oberseite der Seitenwände eine Neigung von 20 Grad bis 50 Grad aufweist, insbesondere die Neigung 39 Grad beträgt.

2. Maschinenstruktur gemäß Anspruch 1, wobei ein Portalelement (7) auf dem Träger (6) montiert ist und mindestens eine Trägerschiene (8) auf einer Oberfläche des Trägers (6) angeordnet ist, um das Portalelement (7) entlang der Trägerschiene (8) bewegen zu können.

3. Maschinenstruktur gemäß Anspruch 1 oder 2, wobei zwei Drehachsen und der Maschinenkopf (11) fest am Portalelement (7), insbesondere an der Unterseite des Portalelements, montiert sind.

4. Maschinenstruktur gemäß Anspruch 3, wobei die Montageposition der zwei Drehachsen und des Maschinenkopfes (11) so gewählt ist, dass der Schwerpunkt der zwei Drehachsen und des Maschinenkopfes (11) auf dem Träger (6) zentriert ist.

5. Maschinenstruktur gemäß einem der Ansprüche 2 bis 4, wobei das Portalelement (7) symmetrisch zu der Achse ist, entlang der das Portalelement (7) verfahrbar ist, insbesondere das Portalelement (7) in horizontaler Richtung, vorzugsweise in X-Richtung, verfahrbar ist.

6. Maschinenstruktur gemäß einem der Ansprüche 2 bis 5, wobei der Träger (6) an mindestens zwei separat an der ersten Säule (4a) und der zweiten Säule (4b) vorgesehenen Säulenschienen (5a, 5b) geführt werden kann, insbesondere der Träger (6) zwischen der ersten Säule (4a) und der zweiten Säule (4b) angeordnet ist und die zwei Säulenschienen (5a, 5b) an der inneren Seitenfläche der Säulen (5a, 5b) positioniert sind.

7. Maschinenstruktur gemäß einem der Ansprüche 1 bis 6, wobei an den an den Seitenwänden (2a, 2b) und/oder Trägerschienen montierten Linearführungen (3a, 3b) Kühlkanäle vorgesehen sind.

8. Maschinenstruktur gemäß einem der Ansprüche 1 bis 7, wobei der Querschnitt des Trägers (6) eine rechteckige, vorzugsweise eine quadratische Form aufweist.

9. Maschinenstruktur gemäß einem der Ansprüche 1 bis 8, wobei der Sockel (2), die erste Säule (4a) und die zweite Säule (4b) und der Träger (6) einen geschlossenen Rahmen bilden.

10. Werkzeugmaschine, insbesondere zur Laserbearbeitung, Lasertexturierung, zum Schneiden, Beschichten, Fräsen, Bohren und zur additiven Fertigung, mit der Maschinenstruktur gemäß einem der Ansprüche 1 bis 9.

## Revendications

1. Structure de machine pour une machine-outil (1), en particulier une machine-outil à 5 axes, comprenant :
une base (2) ;
une première colonne (4a) et une seconde colonne (4b) verticalement montées sur la surface supérieure de la base (2) et configurées pour être mobiles ;
**caractérisée en ce que**
la première colonne et la seconde colonne sont reliées par une poutre (6), qui peut être entraînée par un moteur de telle sorte que la poutre (6) puisse être mue dans la direction verticale,
dans laquelle la base (2) comprend un lit de machine (2c) et deux parois latérales (2a, 2b), qui font verticalement saillie à partir du lit de machine (2c),
une première paire de guides linéaires (3a) et une seconde paire de guides linéaires (3b) sont agencées en parallèle et séparément sur la surface supérieure des parois latérales (2a, 2b) et la première colonne (4a) et la seconde colonne (4b) sont conçues de telle sorte que la première colonne (4a) puisse se mouvoir sur la première paire de guides linéaires dans la direction Y et la seconde colonne (4b) puisse se mouvoir sur la seconde paire de guides linéaires dans la direction Y, la surface supérieure des parois latérales a une pente de 20 degrés à 50 degrés, en particulier la pente est de 39 degrés.

2. Structure de machine selon la revendication 1, dans laquelle un élément portique (7) est monté sur la poutre (6) et au moins un rail de poutre (8) est agencé sur une surface de la poutre (6) pour permettre à l'élément portique (7) d'être mû le long du rail de poutre (8).

3. Structure de machine selon la revendication 1 ou 2, dans laquelle deux axes de rotation et une tête de machine (11) sont montés de façon fixe sur l'élément portique (7), en particulier sur la surface inférieure de l'élément portique (7).

4. Structure de machine selon la revendication 3, dans laquelle la position de montage des deux axes de rotation et de la tête de machine (11) est sélectionné de manière telle qu'un centre de gravité des deux axes de rotation et de la tête de machine (11) soit centré sur la poutre (6).

5. Structure de machine selon l'une des revendications 2 à 4, dans laquelle l'élément portique (7) est symétrique par rapport à l'axe le long duquel l'élément portique (7) est mobile, en particulier l'élément portique (7) est mobile dans une direction horizontale, de préférence dans la direction X.

6. Structure de machine selon l'une des revendications 2 à 5, dans laquelle la poutre (6) peut être guidée sur au moins deux rails de colonne (5a, 5b) prévus séparément sur la première colonne (4a) et la seconde colonne (4b), en particulier, la poutre (6) est agencée entre la première colonne (4a) et la seconde colonne (4b) et les deux rails de colonne (5a, 5b) sont positionnés sur la surface latérale intérieure des colonnes (5a, 5b).

7. Structure de machine selon l'une des revendications 1 à 6, dans laquelle des canaux de refroidissement sont prévus sur les guides linéaires (3a, 3b) montés sur les parois latérales (2a, 2b) et et/ou rails de poutre.

8. Structure de machine selon l'une des revendications 1 à 7, dans laquelle la section transversale de la poutre (6) a une forme rectangulaire, de préférence une forme carrée.

9. Structure de machine selon l'une des revendications 1 à 8, la base (2), la première colonne (4a) et la seconde colonne (4b) et la poutre (G) forment un cadre fermé.

10. Machine-outil, en particulier pour usinage laser, texturage laser, découpe, placage, fraisage, perçage et fabrication additive, comprenant la structure de machine selon l'une des revendications 1 à 9.
